# EUROPÄISCHE PATENTANMELDUNG

(11) **EP 1 825 933 A2**
(43) Veröffentlichungstag der Anmeldung: **29.08.2007**
(21) Anmeldenummer: 06024983.6
(22) Anmeldetag: 02.12.2006
(51) Int. Cl.: B07B 1/46, B07B 1/18

(54) **Verfahren zur Herstellung einer rotationssymmetrischen, insbesondere zylindrischen Siebvorrichtung**

(30) Priorität: 22.02.2006 DE 102006008172
(71) Anmelder: Voith Patent GmbH, 89522 Heidenheim (DE)
(72) Erfinder: Lange, Werner, 89564 Nattheim (DE)

(57) **Zusammenfassung**

Das Verfahren dient zur Herstellung von rotationssymmetrischen, insbesondere zylindrischen Siebvorrichtungen für die Aufbereitung von Fasersuspensionen. Bei solchen Sieben wird eine Vielzahl von achsparallel angeordneten Profilstäben in gebogene Stabhalter (1) am Außenumfang eingesetzt und befestigt. Die endgültige Form der Siebvorrichtung wird durch Umformen erzeugt, wobei die beim Umformen benötigten Biegekräfte z.B. an zwei oder vier Stellen (8, 9), die am Innenumfang der Stabhalter (1) liegen, angreifen und so gerichtet sind, dass der Krümmungsradius vergrößert wird.

## Beschreibung

Die Erfindung bezieht sich auf ein Verfahren gemäß dem Oberbegriff des Anspruchs 1.

Ein bekanntes Beispiel für den Einsatz von Siebvorrichtungen, die nach dem Verfahren dieser Art herstellbar sind, ist das Sortieren von Faserstoffsuspensionen, wie es in Drucksortierern der Papier erzeugenden Industrie durchgeführt wird. Dabei sollen die in der Suspension enthaltenen Fasern durch das Sieb hindurch treten, während die nicht gewünschten festen Bestandteile an dem Spalt abgewiesen und aus der Siebvorrichtung wieder herausgeleitet werden. Dadurch, dass die Öffnungen eine im Wesentlichen längliche Form haben, also Schlitze oder Spalten sind, werden faserige Teilchen leichter durchgelassen als die kubischen, auch wenn beide Arten in ähnlicher Größenordnung vorliegen sollten. Mit einer derartigen Sortiertechnologie ist daher ein sehr guter Ausscheidungseffekt von nicht faserigen Störstoffen aus Faserstoffsuspensionen möglich. Denkbar ist auch ein Einsatz zur Trennung unterschiedlicher Faserbestandteile, der sogenannten Faserfraktionierung. Voraussetzung ist allerdings eine hohe Präzision der Schlitzform auf der ganzen Siebfläche. Bei hohen Anforderungen werden zumeist zylindrische Siebvorrichtungen, sogenannte Siebkörbe, verwendet.

Ein mögliches Verfahren, um solche Siebkörbe herzustellen, zeigt die DE 39 27 748 A1, bei der die Profilstäbe durch plastisches Verformen der mit Vertiefungen für die Stäbe vorgesehenen Halteringe eingeklemmt werden. Hierzu werden für derartige Herstellungsverfahren besonders geeignete Profilstäbe verwendet. Mit Hilfe dieses Verfahrens gelang es, die Herstellung wesentlich zu verbilligen. Das Verfahren wird bei Siebkörben verwendet, bei denen die Stäbe am Innenrand der Halteringe eingesetzt werden. Eine solche Anordnung der Stäbe wird gewählt, wenn die Suspension von innen nach außen die Schlitze passieren soll (zentrifugale Fahrweise). Für die zentripetale Fahrweise, also bei einer Suspensionsströmung von außen nach innen, sind z.B. Siebvorrichtungen gemäß DE 44 35 538 A1 verwendbar.

Siebvorrichtungen, die unter Verwendung des erfindungsgemäßen Verfahrens hergestellt worden sind, werden bevorzugt in Drucksortierern der Papier erzeugenden Industrie eingesetzt. Wichtig ist dabei, dass die Dimensionen der Sieböffnungen mit sehr geringen Toleranzen eingehalten werden. Um sie von Verstopfungen frei zu halten, sind zumeist Räumer erforderlich, die in geringerem Abstand an der Siebfläche vorbei bewegt werden und die hydraulische Impulse erzeugen. Siebvorrichtungen für den Einsatz in Drucksortierern müssen daher sehr präzise gefertigt sein und hohen Belastungen standhalten.

Der Erfindung liegt die Aufgabe zu Grunde, ein Verfahren zu schaffen, mit dem Siebvorrichtungen wirtschaftlich noch günstiger herstellbar sind. Es soll ohne großen Aufwand auch für verschiedene Größen der Siebvorrichtungen verwendbar sein. Präzision und Festigkeit der hergestellten Siebvorrichtungen sollen hoch sein, um sie in Drucksortierern verwenden zu können.

Diese Aufgabe wird durch die im Kennzeichen des Anspruchs 1 genannten Maßnahmen erfüllt.

In Unteransprüchen sind vorteilhafte Ausgestaltungen des Verfahrens beschrieben.

Mit Hilfe des erfindungsgemäßen Verfahrens gelingt es, insbesondere den Vorgang des Umformens präzise und relativ einfach durchführen zu können. Die zur Umformung benötigten Biegekräfte werden an radial innen liegenden Teilen am Umfang der Stabhalter angesetzt. In diesem Stadium des Herstellungsverfahrens, d.h. also bevor die endgültige Umformung zu einem geschlossenen Zylinder vorgenommen werden soll, besteht die noch unfertige Siebvorrichtung aus einem gebogenen Teil, dessen Krümmungsradius kleiner ist als der Krümmungsradius der fertigen Siebvorrichtung. Daher sind die Stabhalter an ihren - außen liegenden - Stoßstellen noch geöffnet, wodurch das Einsetzen oder Einschieben der Profilstäbe leicht möglich ist. Durch den abschließenden Umformvorgang werden die genannten Stoßstellen in Kontakt gebracht oder zumindest so weit angenähert, dass eine Fixierung, z.B. durch Schweißen vorgenommen werden kann. Die Form des umgeformten Bauteiles wird durch die am Umfang eingeleiteten Biegekräfte und/oder Biegemomente bestimmt. Die bisher üblicherweise aufgebrachte Gegenkraft mit Hilfe einer auf das Bauteil wirkenden Gegenform, z.B. eines sogenannten Biegedornes, kann entfallen. Bekanntlich weist eine solche Gegenform eine Fläche auf, die komplementär zur der gewünschten Form des zu biegenden Bauteiles ist. Insgesamt wird die Biegemaschine, bei der es sich um eine große teure Apparatur handelt, wesentlich vereinfacht. Außerdem ist die Umstellung der Biegemaschine auf Siebvorrichtungen unterschiedlichen Durchmessers leicht durchzuführen, da in der Regel lediglich das Steuerprogramm geändert werden muss.

Die Erfindung und ihre Vorteile werden erläutert an Hand von Zeichnungen. Dabei zeigen:
- Figur 1:: Das Prinzip des Umformens gemäß des erfindungsgemäßen Verfahrens;
- Figur 2:: Eine schematische Darstellung des Umformens;
- Figur 3:: Einen fertigen Siebkorb in perspektivischer Skizze;
- Figur 4:: Teil eines erfindungsgemäß hergestellten Schlitzsiebes;
- Figur 5:: Schematisch: Eine Biegemaschine bei Durchführung eines erfindungsgemäßen Verfahrensschrittes.

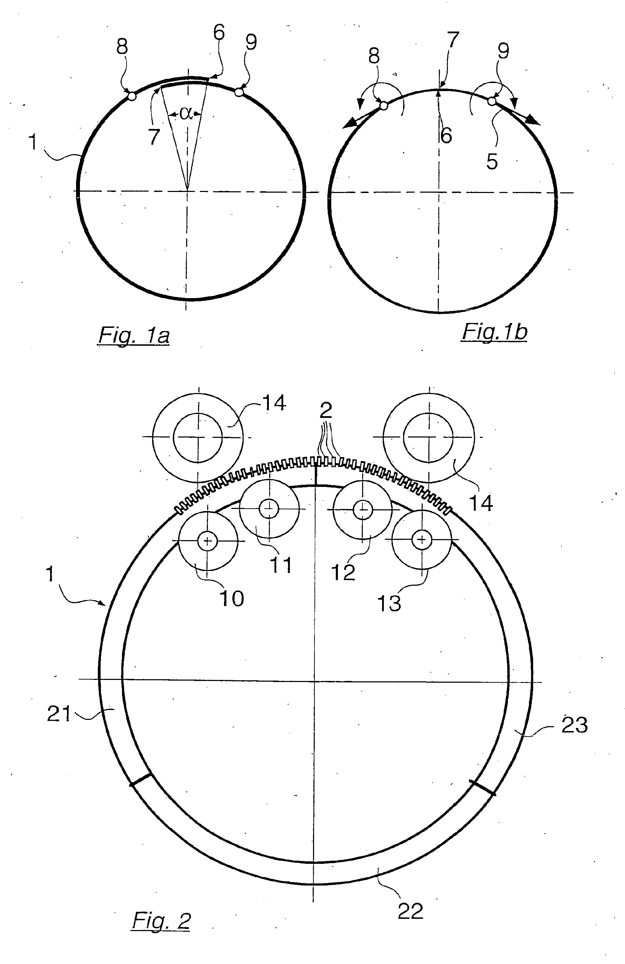

Die Figuren 1 a und 1 b zeigen das Prinzip der Verformung in zwei Skizzen. In Fig. 1 a ist ein Stabhalter 1 angedeutet , und zwar in einem Zustand, bei dem der Krümmungsradius dieses Stabhalters 1 kleiner ist als der Krümmungsradius des fertigen Siebkorbes. Dabei ist der Umfangswinkel des Stabhalters 1 größer als 360°, so dass also an den Stoßenden 6 und 7 eine Überlappung vorliegt. In diesem Zustand sind die außen liegenden Aussparungen 4 weit genug geöffnet, so dass die Profilstäbe 2 eingesetzt oder eingeschoben werden können. Diese beschriebene Form der Stabhalter kann beispielsweise durch plastische Verformung erzeugt werden, entweder am einteiligen Stabhalter oder an Segmenten, wenn es sich um eine aus Segmenten zusammengesetzte Siebvorrichtung handelt. Die zusammengefügten, vorzugsweise verschweißten Segmente können dann vor dem Umformen in der Summe einen größeren Umfang haben als es 360° entspricht. So zeigt die Figur 1 a einen Umfang, der um den Überdeckungswinkel α größer ist als 360°.

Nach dem Einsetzen oder Einschieben der Profilstäbe 2 erfolgt eine Umformung der Stabhalter, und zwar so weit, dass die Stoßenden 6 und 7 in Kontakt kommen. Dadurch werden die Aussparungen 4 enger und klemmen die Profilstäbe 2 ein. Die Biegekräfte werden an den Stellen 8 und 9 auf den Stabhalter 1 übertragen. Als Biegekräfte können - wie hier durch Vektoren angedeutet - radial nach innen gerichtete Kräfte, Kräfte in Umfangsrichtung oder Biegemomente, einzeln oder in Kombination aufgebracht werden. Die Biegevorrichtungen, die bei der technischen Durchführung des Verfahrens eingesetzt werden, sind während des Umformens so zu bewegen, dass sich die Stoßenden 6 und 7 nähern, bzw. in Kontakt kommen. Dieser Vorgang ist in der Fig. 1 b dargestellt. Nach Abschluss dieser Umformung und dem Wegfall der Biegekräfte hat die Siebvorrichtung eine zylindrische Form, deren Projektion der Kreis 5 ist.

Wie in Fig. 2 etwas detaillierter dargestellt ist, kann der Stabhalter 1 aus mehreren (hier drei) Segmenten 21, 22, 23 bestehen, die in einem vorher durchgeführten Arbeitsgang bereits miteinander verbunden, z.B. verschweißt wurden. Man sieht in dieser Darstellung auch einige der Profilstäbe 2 eingezeichnet, die sich am Außenumfang des Stabhalters 1 eingesetzt sind. Anzumerken ist bei dieser Darstellung, dass eine Siebvorrichtung mit mindestens zwei Stabhaltern 1 (meistens mehr) versehen sein muss und dass hier auf Grund der Darstellung in Draufsicht nur ein einziger Stabhalter sichtbar ist. Um in einer technischen Ausführung des erfindungsgemäßen Verfahrens sowohl Kräfte als auch im Bedarfsfall Biegemomente auf die Stabhalter 1 übertragen zu können, werden gemäß Fig. 2 vier Biegevorrichtung 10, 11, 12, 13 verwendet, d.h. die Biegekräfte werden an vier Stellen auf die Stabhalter 1 übertragen. Die Biegevorrichtung 10, 11, 12, 13 können mit Vorteil so ausgerüstet sein, dass während des Biegevorgangs ein überstehender Teil des Stabhalters 1 eingeklemmt wird. Dabei können jeweils zwei Biegevorrichtungen, z.B. 10 und 11, bzw. 12 und 13, so zusammenwirken, dass sie gemeinsam ein Biegemoment erzeugen. Wie bereits erwähnt, ist es von Vorteil, die Biegevorrichtungen während des Umformens so zu bewegen, dass die Stabhalter 1 an ihren Stoßstellen 6 und 7 zusammen kommen. In anderen Fällen könnten sie langsam rotieren und dadurch die Stoßstellen 6 und 7 zusammen fahren. Es ist von Vorteil, die Stoßstellen 6 und 7 so zu gestalten, dass die erforderliche Dimensionierung der Siebvorrichtung gerade dann gewährleistet ist, wenn die zwei Stoßstellen in Kontakt kommen. Dadurch ist eine sehr präzise sichere Fertigung möglich.

Es kann zweckmäßig sein, eine oder mehrere Haltewalzen 14 an der Außenkontur vorzusehen, die das Festklemmen der Stabhalter 1 in den Biegevorrichtungen unterstützen und/oder einen Gegenhalt für die Biegevorrichtungen 12 und/oder 13 bilden. Sie sind normalerweise nicht dazu bestimmt, Biegekräfte zum Umformen der Stabhalter 1 aufzubringen.

Nicht gezeigt in dieser Darstellung ist der sich anschließende Arbeitsgang, bei dem eine feste Verbindung der Stoßstellen 6 und 7, z.B. durch Schweißen hergestellt wird. Mit Vorteil werden die Biegekräfte erst nach der erfolgten Verbindung an den Stoßstellen zurückgenommen.

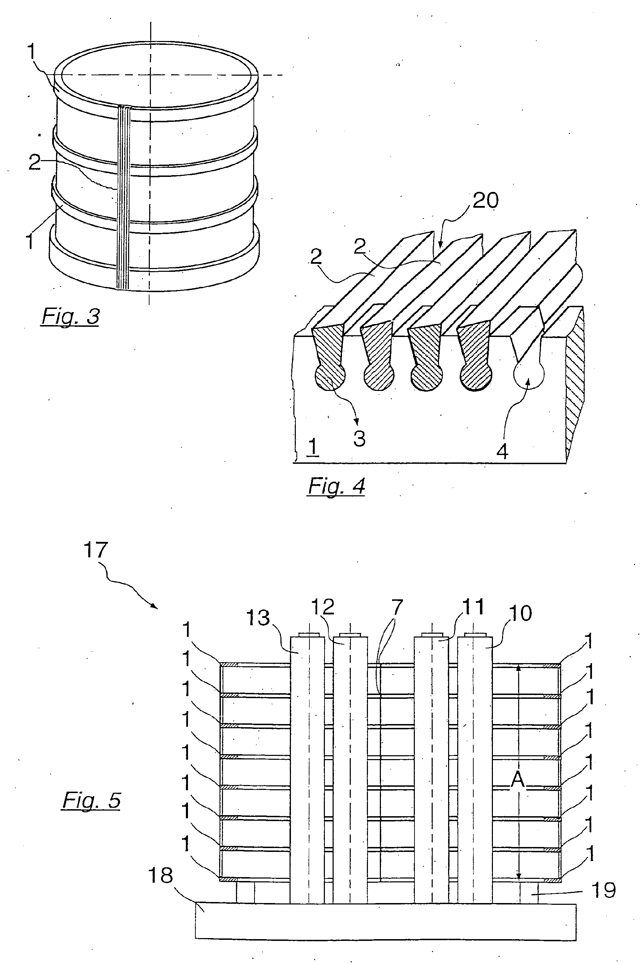

Ein fertiger erfindungsgemäß hergestellter Siebkorb ist in Fig. 3 schematisch und perspektivisch dargestellt. Man sieht, dass in diesem Falle vier Stabhalter 1 verwendet werden, an deren Außenumfang die Profilstäbe 2 eingeklemmt sind (nur wenige gezeichnet). Dabei sind die Profilstäbe 2 achsparallel ausgerichtet.

Wie in Fig. 4 gezeigt, sind die Profilstäbe 2 mit ihren Stabfüßen 3 in Aussparungen 4 der Stabhalter 1 eingesetzt. Sie können so angeordnet sein, dass sich zwischen ihnen jeweils eine schlitzförmige Sieböffnung 20 befindet. In der Praxis haben solche Schlitze eine Weite zwischen 0,08 und 2 mm. Beispiele für nach diesem Verfahren herstellbare Siebkörbe zeigt die EP 0 499 154. Es besteht aber auch die Möglichkeit, mit Hilfe des erfindungsgemäßen Verfahrens Lochsiebkörbe herzustellen. Eine ähnliche Siebvorrichtung ist z.B. in der DE 196 35 189 beschrieben. Zu den Figuren 4 und 5 ist noch anzumerken, dass an diesen Teildarstellungen die Krümmung der Stabhalter 1 nicht sichtbar ist.

Fig. 5 zeigt in grob schematischer Form eine zur Durchführung des Verfahrens geeignete Biegemaschine 17. Dabei ist hier eine Ansicht gewählt aus der Mitte eines zu fertigenden Siebzylinders heraus mit Blick auf dessen Innenfläche. Das Arbeitsprinzip und die Situation im Fertigungsablauf entspricht etwa dem, was in Fig. 2 dargestellt ist. So weist auch die Biegemaschine 17 gemäß Fig. 6 vier Biegevorrichtungen 10, 11, 12, 13 auf, welche bei einer senkrechten Anordnung der Maschine auch als Biegetürme bezeichnet werden können. Sie können so konstruiert sein, dass es möglich ist, die Überstände der Stabhalter 1 zeitweise festzuklemmen. Die Biegemaschine 17 weist einen Rahmen 18 auf mit nur grob angedeuteten Stützelementen 19 für die zu biegenden Bauteile. Mit Vorteil sind die Biegevorrichtungen 10, 11, 12, 13 in diesem Rahmen seitlich verfahrbar, so dass in der bereits beschriebenen Weise das erfindungsgemäße Verfahren durchgeführt werden kann. Zweckmäßigerweise haben die Biegevorrichtungen 10, 11, 12, 13 eine Höhe, die es ermöglicht, die Biegekräfte über die gesamte Axialerstreckung A der fertigen Siebvorrichtung einzuleiten.

## Patentansprüche

1. Verfahren zur Herstellung einer rotationssymmetrischen, insbesondere zylindrischen Siebvorrichtung mit einer Vielzahl von Profilstäben (2), bei dem
1.1 gebogene Stabhalter (1) erzeugt werden, deren Krümmungsradius kleiner ist als der der fertigen Siebvorrichtung und die am Außenumfang mit randoffenen Aussparungen (4) versehen sind, deren Form den Stabfüßen (3) der Profilstäbe (2) im Wesentlichen komplementär entspricht,
1.2 die Profilstäbe (2) parallel zueinander in die randoffenen Aussparungen (4) der Stabhalter (1) eingesetzt werden, die einen Krümmungsradius aufweisen, der kleiner ist als der der fertigen Siebvorrichtung,
1.3 aus den mit den Profilstäben (2) versehenen Stabhaltern (1) Ringe erzeugt werden, wobei der Krümmungsradius der Stabhalter (1) durch Umformen vergrößert wird, wodurch sich die Aussparungen (4) verengen und die Profilstäbe (2) einklemmen,
1.4 die beim Umformen benötigten Biegekräfte an mindestens zwei Stellen (8, 9) an den nicht mit Aussparungen (4) versehenen Seiten der Stabhalter (1) übertragen werden und
1.5 die Stabhalter (1) nach dem Umformenan ihren beiden Stoßenden (6, 7) fest miteinander verbunden werden.

2. Verfahren nach Anspruch 1,
**dadurch gekennzeichnet,**
**dass** sich die Stelle (8, 9) zur Einleitung der Biegekräfte im Wesentlichen über die axiale Erstreckung (A) der Siebvorrichtung erstreckt.

3. Verfahren nach Anspruch 1 oder 2,
**dadurch gekennzeichnet,**
**dass** die Stelle (8, 9) während des Umformens am Stabhalter (1) fixiert ist.

4. Verfahren nach einem der voran stehenden Ansprüche,
**dadurch gekennzeichnet,**
**dass** die Biegekräfte sowohl nach radial außen als auch in Umfangsrichtung wirken.

5. Verfahren nach einem der voran stehenden Ansprüche,
**dadurch gekennzeichnet,**
**dass** beim Umformen keine die Umformung beeinflussenden Kräfte auf die Außenfläche des umzuformenden Bauteiles übertragen werden.

6. Verfahren nach einem der voran stehenden Ansprüche,
**dadurch gekennzeichnet,**
**dass** beim Umformen keine Gegenform verwendet wird.

7. Verfahren nach einem der voran stehenden Ansprüche,
**dadurch gekennzeichnet,**
**dass** die Biegekräfte auch während der Verbindung der Stabhalter (1) zu vollständigen Ringen aufgebracht werden.

8. Verfahren nach einem der voran stehenden Ansprüche,
**dadurch gekennzeichnet,**
**dass** die Stabhalter beim Umformen in den die Biegekräfte aufbringenden Biegevorrichtungen (10, 11, 12, 13) eingeklemmt werden.

9. Verfahren nach einem der voran stehenden Ansprüche,
**dadurch gekennzeichnet,**
**dass** die Einleitung der Biegekräfte an maximal vier Stellen vorgenommen wird, wozu vier Biegevorrichtungen (10, 11, 12, 13) benutzt werden.

10. Verfahren nach Anspruch 8 oder 9,
**dadurch gekennzeichnet,**
**dass** jeweils zwei Biegevorrichtungen (10, 11, 12, 13) eine Biege-Gruppe bilden, die im Zusammenwirken ein Biegemoment auf die Stabhalter (1) überträgt.

11. Verfahren nach einem der Ansprüche 1 bis 8,
**dadurch gekennzeichnet,**
**dass** die Einleitung der Biegekräfte an sechs Stellen vorgenommen wird, wozu vier Biegeeinrichtungen (10, 11, 12, 13) und zwei Stützwalzen (14) verwendet werden.

12. Verfahren nach Anspruch 11,
**dadurch gekennzeichnet,**
**dass** jeweils zwei Biegevorrichtungen (10, 11, 12, 13) und eine Stützwalze (14) eine Biege-Gruppe bilden, die im Zusammenwirken ein Biegemoment auf die Stabhalter (1) überträgt.

13. Verfahren nach einem der voran stehenden Ansprüche,
**dadurch gekennzeichnet,**
**dass** die Stabhalter (1) an ihren Stoßenden (6, 7) durch Schweißen miteinander verbunden werden.

14. Verfahren nach einem der voran stehenden Ansprüche,
**dadurch gekennzeichnet,**
**dass** die Umformung und die feste Verbindung der Stabhalter (1) mit derselben Maschine durchgeführt werden.

15. Verfahren nach einem der voran stehenden Ansprüche,
**dadurch gekennzeichnet,**
**dass** die Siebvorrichtung vor dem letzten Umformen aus Segmenten (21, 22, 23) zusammengesetzt wird.

16. Siebkorb für einen in der Papier erzeugenden Industrie einsetzbaren Drucksortierer, hergestellt durch ein Verfahren nach einem der voran stehenden Ansprüche.
